# EUROPEAN PATENT APPLICATION

(11) **EP 3 936 264 A1**
(43) Date of publication of application: **12.01.2022**
(21) Application number: 20766249.5
(22) Date of filing: 04.03.2020
(51) Int. Cl.: B23B 27/14, B23B 27/20, C04B 35/5835

(54) **CBN SINTERED COMPACT AND CUTTING TOOL**

(30) Priority: 05.03.2019 JP 2019039559
(71) Applicant: Mitsubishi Materials Corporation, Tokyo 100-8117 (JP)
(72) Inventor: TAKEI, Ryota, Naka-shi, Ibaraki 311-0102 (JP); OGUCHI, Shiro, Anpachi-gun, Gifu 503-2394 (JP); MOMMA, Masashi, Tokyo 100-8117 (JP); YUMOTO, Kenji, Tokyo 100-8117 (JP)
(74) Representative: Gille Hrabal Partnerschaftsgesellschaft mbB Patentanwälte
(86) International application number: PCT/JP2020/009051
(87) International publication number: WO 2020/179809

(57) **Abstract**

The objective of the invention is to provide a cBN sintered compact demonstrating high toughness and sufficient resistance to crack propagation in a high-speed interrupted cutting process performed on a difficult-to-machine material such as hardened steel, and a defect-resistant, chipping-resistant cutting tool including the cBN sintered compact as the tool base material. The cBN sintered compact comprises a cubic crystal Ta compound containing C and dispersed in the ceramic binder phase in a proportion of 1.0 to 15.0% by volume, and the mean particle diameter of the cubic crystal Ta compound containing C is 50 to 500 nm.

## Description

### Technical Field

The present invention relates to an ultra high-pressure sintered compact based on cubic boron nitride (hereinafter, also referred to as "cBN") and a cutting tool composed of the sintered compact as a tool substrate (hereinafter, also referred to as "cBN tool").

### Background Art

Since cBN sintered compacts have superior toughness and low affinity to iron-based materials, such compacts have been widely used in cutting tool materials for iron-based work materials, such as steel and cast iron, by taking advantage of such properties.

For example, PTL 1 discloses a cBN sintered compact having a continuous binder phase composed of a (Ti,Ta/Nb)CN phase, a hard dispersion phase composed of cBN, and an intermediate adhesive phase therebetween composed of Ti-AI compound and WC.

For example, PTL 2 discloses a cBN sintered compact composed of 30 to 80 vol% cBN, a binder phase and incidental impurities, wherein the binder phase is composed of:
30 to 80 vol% complex nitride or complex carbonitride, for example, (Ti,Ta)N, (Ti,Nb)(C,N) or (Ti,V,Ta)(C,N), containing at least one of V, Nb and Ta, and Ti in the entire binder phase,
5 to 40 vol% orthorhombic boride containing at least one of V, Nb and Ta in the entire binder phase,
5 to 30 vol% AlN in the entire binder phase, and
2 to 20 vol% Al₂O₃ in the entire binder phase.

### Citation List

### Patent Literature

PTL 1: JP 2003-236707A
PTL 2: JP 4830571B

### Summary of Invention

### Technical Problem

The cBN sintered compacts disclosed in PTLs 1 and 2 can dissolve Ta and Nb into Ti and form complex nitrides or complex carbides containing, for example, Ti, Ta and Nb, thereby improving high-temperature strength, abrasion resistance and chipping resistance. Unfortunately, the studies by the present inventors have confirmed that these sintered compacts do not have satisfactory cracking resistance, because the compacts cannot prevent the propagation of cracks generated in the binder phase during, for example, a high-speed intermittent cutting process of hardened steel where the cutting causes the edges of tools to reach high temperature.

Accordingly, an object of the present invention is to provide cBN sintered compacts having satisfactory crack propagation resistance and high toughness as well as cutting tools having superior fracture resistance and chipping resistance in a high-speed intermittent cutting process of difficult-to-machine materials such as hardened steel.

### Solution to Problem

One embodiment of the present invention provides a cBN sintered compact described in the following Aspects (1) to (7).

Aspect (1): A cBN sintered compact comprises a cubic boron nitride and a ceramic binder phase, wherein a cubic C-containing Ta compound in an amount of 1.0 to 15.0 vol% is dispersed in the ceramic binder phase and has a mean particle diameter of 50 to 500 nm.

Aspect (2): The cBN sintered compact described in Aspect (1) has a Bragg angle (2θ) of 34.66° to 35.06°, where the Bragg angle indicates the X-ray diffraction peak position assigned to the {111} plane in the cubic C-containing Ta compound.

Aspect (3): The cBN sintered compact described in Aspect (1) or (2) has a ratio (I2/I1) of 0.10 to 0.60 of a second peak intensity (I2) to a first peak intensity (I1), where the first peak intensity (I1) indicates the maximum X-ray diffraction peak intensity among the ingredients constituting the ceramic binder phase excluding the cubic C-containing Ta compound, and the second peak intensity (I2) indicates the X-ray diffraction peak intensity assigned to the {111} plane in the cubic C-containing Ta compound.

Aspect (4): The cBN sintered compact described in Aspect (1) includes a cubic compound composed of a cubic C-containing Nb compound by which the entire cubic C-containing Ta compound is replaced.

Aspect (5): The cBN sintered compact described in Aspect (1) includes a cubic compound composed of a cubic C-containing Nb compound by which part of the cubic C-containing Ta compound is replaced.

Aspect (6): The cBN sintered compact described in Aspect (4) or (5) has a Bragg angle (2θ) of 34.53° to 35.06°, where the Bragg angle indicates the X-ray diffraction peak position assigned to the {111} plane in the cubic compound.

Aspect (7): The cBN sintered compact described in any of Aspects (4) to (6) has a ratio (I3/I1') of 0.05 to 0.40 of a third peak intensity (I3) to a first peak intensity (I1'), where the first peak intensity (I1') indicates the maximum X-ray diffraction peak intensity among the ingredients constituting the ceramic binder phase excluding the cubic compound, and the third peak intensity (13) indicates the X-ray diffraction peak intensity assigned to the {111} plane in the cubic compound.

Another embodiment of the present invention provides a cutting tool containing the cBN sintered compact according to any of Aspects (1) to (7) as a tool substrate.

### Advantageous Effects

In a high-speed intermittent cutting process of difficult-to-machine materials such as hardened steel, the cBN sintered compacts described above have satisfactory crack propagation resistance and high toughness, and the cutting tools composed of such compacts have superior fracture resistance and chipping resistance.

### Brief Description of Drawings

FIG. 1 is a schematic view illustrating a dispersion of a cubic C-containing Ta compound included in the sintered structure of cBN sintered compact according to one embodiment of the present invention. The shape and dimensions in the drawing do not comply with the actual structure.
FIG. 2 is a schematic view illustrating a dispersion in the case that part of the cubic C-containing Ta compound included in the sintered structure of cBN sintered compact according to one embodiment of the present invention is replaced by a cubic C-containing Nb compound. The shape and dimensions in the drawing do not comply with the actual structure.
FIG. 3 is a diagram illustrating an X-ray diffraction (XRD) pattern of Example sintered compact 1.
FIG. 4 is a diagram illustrating an XRD pattern of Example sintered compact 20.

### Description of Embodiments

Embodiments of the present invention will now be described in detail. Throughout the specification, a numerical range represented by "A to B" (both A and B are numerical values) should include the upper limit (B) and the lower limit (A). The upper limit (B) and the lower limit (A) are shown in an identical unit. The numerical values include tolerances on measurement.

The high-speed intermittent cutting process in the present specification has a cutting rate of 150 m/min or more, and includes an idling step where the cutting edge of cutting tool does not come into contact with a work material during the cutting process, and a machining step where the cutting edge of cutting tool collides with the work material when the cutting tool comes into contact with the work material after the idling step.

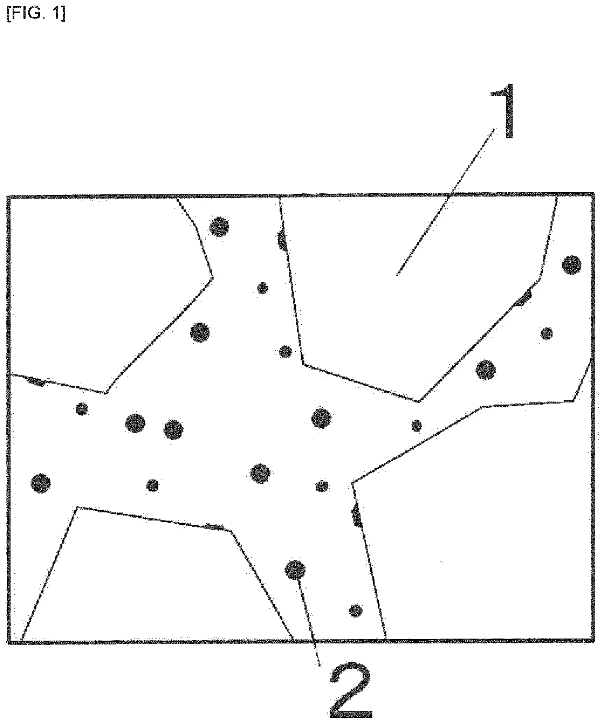

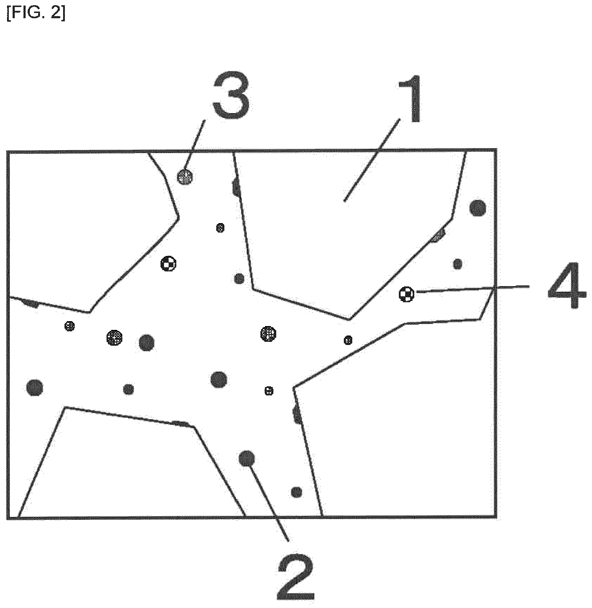

The cBN sintered compact according to one embodiment of the present invention has a dispersion of a cubic C-containing Ta compound as schematically illustrated in FIG. 1, and a dispersion of a cubic C-containing Ta compound partially replaced by a cubic C-containing Nb compound as schematically illustrated in FIG. 2. Another embodiment provides a cutting tool having such a cBN sintered compact as a tool substrate. Hereinafter, these materials and the cutting tool will be described in sequence.

### Mean grain diameter of cubic boron nitride (cBN) grains:

The cBN grains used in the present embodiment preferably has a mean grain diameter of 0.2 to 8.0 µm, although such a range is not essential.

Hard cBN grains in the sintered compact can enhance fracture resistance. In this case, such a mean grain diameter range of 0.2 to 8.0 µm in the cBN grains can prevent the fracture or chipping that originates from the uneven shape of the cutting edge caused by the falling-off of cBN grains on the tool surface during the use in a cutting tool, and can further prevent the propagation of cracks that grow from the boundary between the cBN grains and the ceramic binder phase, which are generated by the stress applied to the cutting edge during the use in the cutting tool, or the propagation of cracks that grow through the break of cBN grains, resulting in superior fracture resistance.

The mean grain diameter of the cBN grains can be calculated as follows.

The cross section of the cBN sintered compact is mirror-finished, and the mirror-finished surface is subjected to the microstructural observation with a scanning electron microscope (hereinafter referred to as "SEM") to give a secondary electron image. A portion including the cBN grains in the resultant image is extracted by image processing, and the mean grain diameter is calculated based on the maximum length of each grain given by image analysis.

The extraction of the portion of cBN grains in the image by the image processing comprises the steps of: displaying the image in monochrome of 256 grayscale including 0 in black and 255 in white to clearly distinguish the cBN grains from the binder phase; and binarizing the image having a ratio of 2 or more of the pixel value of the binder phase portion to the pixel value of the cBN grain portion to make the cBN grains black.

A region for determining the pixel values of the cBN grain portion and the binder phase portion is selected in an area of about 0.5 µm by 0.5 µm, and the mean value determined from at least three different positions within the same region in the image is desirably used as a contrast for each portion.

After the binarization step, the cBN grains which are considered to be in contact with each other are separated by a process , for example, by watershed image processing that cuts the portion where the cBN grains are believed to be in contact with each other. The image analysis is subsequently performed.

The portion corresponding to the cBN grains (i.e., black portion) in the image yielded after the binarization step is subjected to grain analysis, and the resultant maximum length is defined as the maximum length of each grain, namely the diameter of each grain. In the grain analysis for determining the maximum length, a larger length of the two lengths given by calculation of the Feret diameters for one cBN grain is determined to be the maximum length, namely the diameter of each grain. Assuming that each grain is an ideal sphere having this diameter, the volume of each grain is calculated from such a sphere to determine the cumulative volume.

Based on the cumulative volume, a graph was drawn with the vertical axis as the volume percentage [%] and the horizontal axis as the diameter [µm], and the diameter at a volume percentage of 50% was determined to be the mean grain diameter of the cBN grains in the predetermined region. This process is repeated for three observation areas (i.e., three different images), and the mean value of grain diameters at three areas is defined as the mean grain diameter [µm] of the cBN.

In the grain analysis, the length per pixel (µm) is determined with the scale value preliminarily known by SEM. An observation region used in the image processing is preferably a field of view of about 15.0 µm by 15.0 µm in the case that the mean grain diameter of cBN grains is about 3 µm.

### Ceramic binder phase:

The main portion of the ceramic binder phase in the present embodiment can be produced by the use of commonly known raw powdered materials for the ceramic binder phase, such as powdered TiN, TiC, TiCN, Al₂O₃, and TiAl₃.

(1) Cubic C-containing compound particles dispersed in the ceramic binder phase:
   It is speculated that the dispersion of a cubic C-containing compound having a predetermined particle diameter in a ceramic binder phase in a predetermined amount can prevent the propagation of cracks generated in the ceramic binder phase.

### (a) Cubic C-containing Ta compound

The cubic C-containing Ta compound in the present embodiment has a cubic NaCl-type structure (hereinafter, also referred to as "cubic") as a crystal structure, and contains Ta and C bonded to each other. The atomic proportion of Ta and C can be selected from all conventionally known proportions, and should not be necessarily limited to the proportions in a stoichiometric range. In addition, it is preferred that Ta and C are bonded at an atomic proportion of 1:1 without dissolution of other elements, although other elements other than Ta and C may be dissolved to some extent. Examples of solid solution of other elements include carbonitrides of Ta represented by Ta(C,N). The term "to some extent" described herein indicates that the X-ray diffraction peak position assigned to the {111} plane of the cubic C-containing Ta compound satisfies the following range of Bragg angle (2θ).

The Bragg angle indicating the X-ray diffraction peak position assigned to the {111} plane in the cubic C-containing Ta compound is more preferably in a range of 34.66° to 35.06° for the following reasons: If the Bragg angle (2θ) of the diffraction peak position assigned to the {111} plane is below 34.66° or beyond 35.06°, the cubic C-containing Ta compound contains excess amounts of elements other than C and Ta, resulting in a decrease in high-temperature toughness of the cubic C-containing Ta compound and a decrease in crack propagation resistance of the cBN sintered compact used in the substrate for cutting tools.

The Bragg angle indicating the X-ray diffraction peak position assigned to the {111} plane is further more preferably in a range of 34.76° to 34.96°.

Furthermore, the ratio (I2/I1) of a second peak intensity (12) to a first peak intensity (11), where the first peak intensity (11) indicates the maximum X-ray diffraction peak intensity among the ingredients constituting the ceramic binder phase excluding the cubic C-containing Ta compound and the second peak intensity (12) indicates the X-ray diffraction peak intensity assigned to the {111} plane in the cubic C-containing Ta compound, more preferably satisfies a range of 0.10 to 0.60, for the following reasons: If the ratio is below 0.10, the cubic C-containing Ta compound cannot exhibit sufficient effects to prevent the crack propagation. If the ratio is beyond 0.60, an excess amount of cubic C-containing Ta compound is present in the binder phase, thereby the cBN sintered compact cannot have satisfactory hardness, which may impair the fracture resistance of the cBN sintered compact used in the substrate for cutting tools.

For example, if a cBN sintered compact is produced with the known raw powder material described above, the maximum X-ray diffraction peak among the ingredients constituting the ceramic binder phase excluding the cubic C-containing Ta compound is derived from, for example, the {200} plane of TiN, the {200} plane of TiC, the {200} plane of TiCN, and the {104} plane of Al₂O₃.

The X-ray diffraction peak position and diffraction peak intensity assigned to the {111} plane of the cubic C-containing Ta compound, and the maximum X-ray diffraction among the ingredients constituting the ceramics binder phase excluding the cubic C-containing Ta compound can be measured by varying the measurement range of Bragg angle (2θ) from 20° to 80° in the X-ray diffractometry based on the 2θ/θ method using Cu-Kα rays.

### (b) Cubic C-containing Nb compound by which the entire cubic C-containing Ta compound is replaced

The entire cubic C-containing Ta compound may be replaced by the cubic C-containing Nb compound.

The cubic C-containing Nb compound has a cubic NaCl-type structure (hereinafter, also referred to as "cubic"), and contains Nb and C bonded to each other. The atomic proportion of Nb and C can be selected from all conventionally known proportions, and should not be necessarily limited to the proportions in a stoichiometric range. In addition, it is preferred that Nb and C are bonded at an atomic proportion of 1:1 and other elements are not dissolved, although other elements other than Nb and C may be dissolved to some extent. Examples of solid solution of other elements include carbonitrides of Nb represented by Nb(C,N). The term "to some extent" described herein indicates that the X-ray diffraction peak position assigned to the {111} plane in the cubic C-containing Nb compound satisfies the range of Bragg angle (2θ) described later.

### (c) Cubic Nb compound by which part of cubic C-containing Ta compounds is replaced

Part of the cubic C-containing Ta compound may be replaced by the cubic C-containing Nb compound. In the case that the part of the cubic C-containing Ta compound is replaced by the cubic C-containing Nb compound, the ceramic binder phase inevitably contains any one of:
a cubic C-containing Ta compound and a cubic C-containing Nb compound,
a cubic C-containing Ta compound and a cubic C-containing (Ta,Nb) complex compound,
a cubic C-containing Nb compound and a cubic C-containing (Ta,Nb) complex compound,
a cubic C-containing Ta compound, a cubic C-containing Nb compound, and a cubic C-containing (Ta,Nb) complex compound, and
a cubic C-containing (Ta,Nb) complex compound.

The cubic C-containing Ta compound, the cubic C-containing Nb compound and cubic C-containing (Ta,Nb) complex compound are collectively referred to as "a cubic compound" in Aspects (6) to (7) of the present embodiment.

The cubic C-containing Ta compound and the cubic C-containing Nb compound are described above.

Furthermore, the cubic C-containing (Ta,Nb) complex compound has a cubic NaCl-type structure (hereinafter, also referred to as "cubic"), and contains (Ta,Nb) bonded to C. The atomic proportion can be selected from all the known proportions, and should not be necessarily limited to the proportions in a stoichiometric range. It is preferred that Ta, Nb and C are bonded at an atomic proportion of m:n:1 (m>0, n>0, and m+n=1) without dissolution of other elements, although other elements other than Ta, Nb and C may also be dissolved to some extent. Examples where other elements are dissolved include carbonitrides represented by (C,N) indicating that some sites of C are occupied by N.

The cubic C-containing Nb compound by which the entire cubic C-containing Ta compound is replaced as described in (b), and the cubic C-containing Nb compound by which part of the cubic C-containing Ta compound is replaced as described in (c) may be collectively represented by (Ta,Nb)C. In this representation, the elements located at the site of C may be, for example, (C,N), and the metal element other than Ta and Nb may be dissolved to some extent as described above. The term "to some extent" described herein indicates that the X-ray diffraction peak position assigned to the {111} plane of (Ta,Nb)C satisfies a range of Bragg angle (2θ) described below.

The Bragg angle indicating the X-ray diffraction peak position assigned to the {111} plane of (Ta,Nb)C is more preferably in a range of 34.53° to 35.06° for the following reasons: If the Bragg angle (2θ) is below 34.53° or beyond 35.06° of the diffraction peak position assigned to the {111} plane of (Ta,Nb)C, the amounts of elements other than C, Ta and Nb dissolved into (Ta,Nb)C increase, which may result in a decrease in high-temperature toughness of (Ta,Nb)C and a decrease in crack propagation resistance of the cBN sintered compact used in the substrate for cutting tools.

The Bragg angle indicating the X-ray diffraction peak position assigned to the {111} plane is more preferably in a range of 34.66° to 34.93°. In the case that multiple diffraction peaks of the {111} plane derived from (Ta,Nb)C can be detected, all the peaks are more preferably in a predetermined range of Bragg angle (2θ) (i.e., 34.53° to 35.06° or 34.66° to 34.93° as described above).

In the case that the first peak intensity (I1') indicates the maximum X-ray diffraction peak intensity among the ingredients other than (Ta,Nb)C constituting the ceramic binder phase and the third peak intensity (13) indicates the X-ray diffraction peak intensity assigned to the {111} plane of (Ta,Nb)C, the ratio (I3/I1') of a third peak intensity (I3) to a first peak intensity (I1') more preferably lies within a range of 0.05 to 0.40 for the following reasons: If the ratio is below 0.05, the effects to prevent the crack propagation due to (Ta,Nb)C cannot be sufficiently achieved. If the ratio is beyond 0.40, an excess amount of (Ta,Nb)C is present in the binder phase, thereby the cBN sintered compact cannot exhibit satisfactory hardness, which may impair the fracture resistance of the cBN sintered compact used in the substrate for cutting tools.

In the case that multiple diffraction peaks of the {111} plane derived from (Ta,Nb)C can be detected, the total of all the X-ray diffraction peak intensities assigned to the {111} plane in (Ta,Nb)C should be equal to I3.

For example, if a cBN sintered compact is produced with known raw materials described above, the maximum X-ray diffraction peak among the ingredients other than (Ta,Nb)C constituting the ceramic binder phase is derived from, for example, the {200} plane of TiN, the {200} plane of TiC, the {200} plane of TiCN, and the {104} plane of Al₂O₃.

The X-ray diffraction peak position and diffraction peak intensity assigned to the {111} plane of (Ta,Nb)C, and the maximum X-ray diffraction peak intensity among the ingredients other than (Ta,Nb)C constituting the ceramics binder phase can be measured by varying the range of measurement of Bragg angle (2θ) from 20° to 80° in the X-ray diffractometry based on the 2θ/θ method using Cu-Kα rays.

### (2) Mean particle diameter

The cubic C-containing Ta compound and (Ta,Nb)C preferably have a mean particle diameter of 50 to 500 nm for the following reasons: A mean particle diameter below 50 nm causes the cracks to readily circumvent the cubic C-containing Ta compound and (Ta,Nb)C, leading to insufficient prevention of the crack propagation. A mean particle diameter beyond 500 nm causes the wear resistance to decrease, resulting in a reduction in service life of the cBN sintered compact used in the substrate for cutting tools. The cubic C-containing Ta compound and (Ta,Nb)C more preferably have a mean particle diameter of 200 to 450 nm.

### (3) Content

The cubic C-containing Ta compound and (Ta,Nb)C are preferably dispersed in the ceramic binder phase in a content of 1.0 to 15.0 vol% for the following reasons: A content below 1.0 vol% causes the frequency where the cracks can reach the cubic C-containing Ta compound and (Ta,Nb)C to decrease, leading to insufficient prevention of the crack propagation. In other words, such a low content is insufficient to improve the toughness of the cBN sintered compact. A content beyond 15.0 vol% causes the hardness of the ceramic binder phase to decrease and the wear of the ceramic binder phase to readily proceed to promote the falling-off of cBN grains, resulting in reductions in wear resistance and fracture resistance of the cBN sintered compact used in the substrate for cutting tools. The cubic C-containing Ta compound and (Ta,Nb)C are more preferably dispersed in the ceramic binder phase in a content of 2.0 to 10.0 vol%.

### (5) Method for measuring mean particle diameter and content

The mean particle diameter of the cubic C-containing Ta compound and (Ta,Nb)C is measured, for example, as follows: By Auger electron spectroscopy (hereinafter referred to as "AES"), the cross-sectional structure of the cBN sintered compact is analyzed based on a mapping image of Ta, Nb, and C elements in one observation area (i.e., one image) to identify overlapped areas of Ta and C elements as particles of a cubic Ta C-containing compound, of Nb and C elements as particles of a cubic C-containing Nb compound, and of Ta, Nb, and C elements as particles of a cubic C-containing (Ta,Nb) complex compound. The diameter of each particle is defined by a Feret diameter.

Assuming that each particle is an ideal sphere having this diameter (i.e., Feret diameter), the volume of each particle is calculated from such a sphere to determine the cumulative volume as in the case of the cBN grain described above. Based on the cumulative volume, a graph is drawn with the vertical axis as volume percentage [%] and the horizontal axis as diameter [µm], and the diameter at a volume percentage of 50% is determined to be the mean particle diameter of the cubic Ta C-containing compound and (Ta,Nb)C within one measured image.

This process is repeated for at least three observation areas (i.e., three images), and the mean value of particle diameters at three areas is defined as a mean particle diameter [µm] of the cubic Ta C-containing compound and (Ta,Nb)C. In the particle analysis, the length per pixel (µm) is determined with a scale value preliminarily known by AES. The observation area used in the image analysis is preferably a field of view of about 5.0 µm by 3.0 µm.

The contents of the cubic C-containing Ta compound and (Ta,Nb)C in the ceramic binder phase are measured, for example, as follows: By AES as in the above case, the overlapped areas each having Ta element and C element, Nb element and C element, and Ta element and Nb element and C element in one observation area (i.e., one image) are identified as the cubic Ta C-containing compound particles, the cubic C-containing Nb compound particles, and the cubic C-containing (Ta,Nb) complex compound particles, respectively, and an area occupied by each particle is calculated.

In one observation area (i.e., one image), a portion where B and N elements overlap with each other and the metal elements derived from the ceramic binder phase, for example, Ti and/or Al element does not overlap with the B and N elements, is defined as cBN grains, the area occupied by the cBN grains is calculated, and the remaining portion is defined as the area of the binder phase. The content of the cubic C-containing Ta compound and (Ta,Nb)C in the ceramic binder phase in one observation area can be calculated from the total area of the cubic C-containing Ta compound, the cubic C-containing Nb compound and the cubic C-containing (Ta,Nb) complex compound particles and the area of the binder phase, where all areas are calculated as described above.

This process is repeated for at least three observation areas (i.e., three images), and the mean value of the total content of the cubic C-containing Ta compound and (Ta,Nb)C particles calculated for each image is determined to be the content (vol%) of the cubic C-containing Ta compound and (Ta,Nb)C occupied in the ceramic binder phase. An observation area used in the image analysis is preferably a field of view of about 5.0 µm by 3.0 µm.

### Production of sintered compact:

One example production of a cBN sintered compact having superior toughness in the present invention will now be explained in the following procedures (1) to (3):

### Procedure (1): preparation of raw powder for ingredients constituting binder phase

Raw powders for the binder phase, such as a cubic C-containing Ta compound, and (Ta,Nb)C as needed are prepared. Raw powders for the primary portion of the binder phase (for example, TiN powder, TiC powder, TiCN powder, and TiAl₃ powder as described later and shown in Table 1) are also prepared. The raw powders for the cubic C-containing Ta compound and (Ta,Nb)C are preferably prepared by, for example, the following Processes (a) and (b):

### Process (a): preparation of only crude TaC powder and crude NbC powder

Crude TaC powder and NbC powder having a predetermined mean particle diameter are prepared. A ball mill container lined with hard metal alloy is filled with crude TaC powder having a predetermined mean particle diameter, balls made of hard metal alloy and acetone, and is covered with a lid, and then the powder mixture is pulverized. The mixed slurry is then dried, and the pulverized powder is separated from the balls made of hard metal alloy and classified with a centrifuge. The classified powder has a mean particle diameter (i.e., a median diameter D50) of 50 to 500 nm. Crude NbC having a predetermined mean particle diameter powder is also processed in a similar manner. The resultant TaC powder and NbC powder will be used as raw powders for a cubic C-containing Ta compound and (Ta,Nb)C.

### Process (b): preparation of additional crude powder other than crude TaC and NbC

TaC powder or NbC powder having a predetermined mean particle diameter (the same material used in Process (a)) is mixed with one or more powdered Ta compounds other than TaC, such as TaN powder, TaB₂ powder, TaSi₂ powder and Ta₂O₅ powder, or one or more powdered Nb compounds other than NbC, such as NbN powder, NbB₂ powder, NbSi₂ powder and Nb₂O₅ powder, each powder having a predetermined mean particle diameter. The mixture is shaped under a predetermined pressure into a compact. The compact is heated at a predetermined temperature in a range of 1100 to 1300°C in a vacuum atmosphere, and then pulverized by attrition and compression. The pulverized powder is sieved through a screen having a mesh size of 45 µm to produce the sieved powder (hereinafter, referred to as "processed powder").

To produce raw powders for a cubic C-containing Ta compound and (Ta,Nb)C pulverized into a predetermined mean particle diameter, for example, the processed powder is pulverized in a ball mill, and the pulverized powder is then subjected to centrifugal classification. The resulting classified powder has a mean particle diameter (i.e., a median diameter D50) of 50 to 500 nm, and will be used as raw powders for a cubic C-containing Ta compound and (Ta,Nb)C.

### Procedure (2): pulverization and mixing

A ball mill container lined with hard metal alloy is filled with the raw powders produced in Processes (a) and (b) of Procedure (1), raw materials for the primary portion of the binder phase, balls made of hard metal alloy and acetone, and is covered with a lid, and the powder mixture is pulverized and mixed in a ball mill. After the mixing, cBN powder having a mean grain diameter of, for example, 0.2 to 8.0 µm, which functions as a hard phase is added to the powder mixture and mixed in a ball mill. The mixed slurry is then dried, and the resulting powder is separated from the balls made of hard metal alloy to produce raw powders for sintered compacts derived from each of Processes (a) and (b) described above.

### Procedure (3): compaction and sintering

The raw powders for sintered compacts derived from Processes (a) and (b) produced in Procedure (2) described above are compacted under a predetermined pressure into green compacts. The green compacts are calcined at a temperature in a range of 900 to 1000°C in a vacuum atmosphere, and then sintered, for example, under a pressure of 5.5 GPa at a temperature in a range of 1200 to 1600°C to produce cBN sintered compacts derived from Processes (a) and (b) according to one embodiment of the present invention.

In each step leading to the sintering, it is preferred that the raw powders should be prevented from oxidation and processed in a non-oxidizable protective atmosphere.

### Examples

Examples will now be described below.

### <Example A>

Process (a): preparation of only crude TaC powder and crude NbC powder and Process (b): preparation of additional crude powder other than crude TaC and NbC were both used to produce cBN sintered compacts of Example A. Details are as follows:

### Preparation of raw powder by Process (a)

Example sintered compacts 3, 8, 9, 10 and 15 (described later) were produced based on this process. Crude TaC powder having a mean particle diameter of 1.5 µm was pulverized in a ball mill as described above, and then subjected to centrifugal classification to yield raw powders having mean particle diameters (i.e., median diameters D50) shown in Table 2 for cubic C-containing Ta compounds.

### Preparation of raw powder by Process (b)

Example sintered compacts 1, 2, 4 to 7, 11 to 14, and 16 to 19 (described later) were produced based on this process. Crude TaC powder having a mean particle diameter of 1.5 µm, and TaN powder, TaB₂ powder, TaSi₂ powder and Ta₂O₅ powder each having a mean particle diameter of 0.5 to 5.5 µm were prepared and then mixed in predetermined proportions shown in Table 2. Each mixture was pressed into a shape with 50 mm in diameter by 3.0 mm in thickness under a pressure of 1 MPa, and heated at 1200°C in a vacuum atmosphere of 1 Pa or less. The heated mixtures were pulverized with attrition and compression, and sieved through a screen having a mesh size of 45 µm to prepare processed powders.

The processed powders were pulverized in a ball mill as described above, and then subjected to centrifugal classification to yield raw powders having mean particle diameters (i.e., median diameters D50) shown in Table 2 for cubic C-containing Ta compounds.

A ball mill container lined with hard metal alloy was filled with raw powders for cubic C-containing Ta compounds produced by the two different processes described above, raw materials having a mean particle diameter of 0.3 µm to 0.9 µm for the primary portion of the binder phase shown in Table 1, balls made of hard metal alloy and acetone, and was covered with a lid, and the powder mixture was pulverized and mixed in a ball mill. The cBN powder was then added to the mixture such that particulate cBN had a content of 40 to 80 vol% after sintering, and further mixed in a ball mill. The resultant slurry was dried to produce raw powders for the sintered compacts.

The resultant raw powders for sintered compacts were pressed under a pressure of 1 MPa to prepare green compacts with 50 mm in diameter by 1.5 mm in thickness. These green compacts were calcined at 900°C under a vacuum atmosphere of 1 Pa or less, and then sintered at 1400°C under a pressure of 5.5 GPa to produce cBN sintered compacts 1 to 19 of Examples (referred to as "Example sintered compacts 1 to 19") shown in Table 3.

It is noted that the main purpose of calcination applied to the green compacts is for removing the solvent contained during wet mixing.

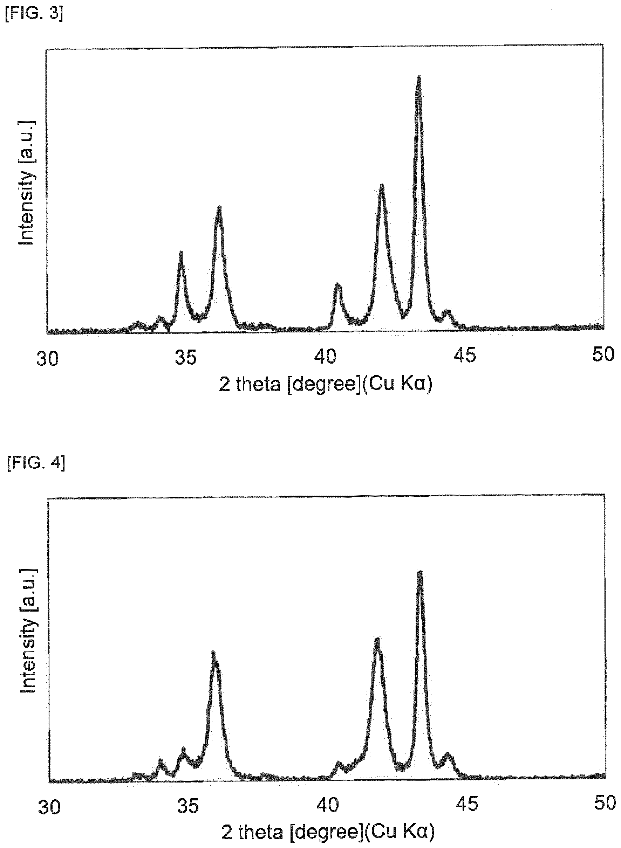

The XRD pattern of Example sintered compact 1 is shown in FIG. 3. FIG. 3 illustrates the X-ray diffraction peak assigned to the {111} plane in the cubic C-containing Ta compound and the X-ray diffraction peak assigned to the {200} plane in TiCN, which is defined as the maximum X-ray diffraction peak among the ingredients constituting the ceramic binder phase excluding the cubic C-containing Ta compound. It is noted that TiCN referred to herein is a bonded compound of Ti, C and N, and the atomic proportion of these elements can be selected from all the known proportions, and should not be necessarily limited to the proportions in a stoichiometric range. Other elements may also be dissolved into TiCN as described above.

Comparative sintered compacts containing cubic C-containing Ta compounds or not containing a cubic C-containing Ta compound having varieties of mean particle diameters, contents in the ceramic binder phase, diffraction peak positions assigned to the {111} plane, and diffraction peak intensity ratios, were produced as follows.

Crude TaC powder having a mean particle diameter of 1.5 µm based on Process (a) was processed similar to Example A to produce raw powders for cubic C-containing Ta compounds in Comparative sintered compacts 1, 2 and 9 (described later). Crude TaC powder having a mean particle diameter of 1.5 µm, and TaN powder, TaB₂ powder, TaSi₂ powder, and Ta₂O₅ powder each having a mean particle diameter of 0.5 to 5.5 µm based on Process (b) were mixed in predetermined proportions shown in Table 4 and processed similar to Example A to produce raw powders for cubic C-containing Ta compounds in Comparative sintered compacts 3 to 8 and 10 (described later). The mean particle diameters (i.e., median diameters D50) of these raw powders were shown in Table 4.

For preparation of Comparative sintered compact 11 (described later), crude Ta₂C powder having a mean particle diameter of 3.0 µm was used in place of TaC to produce alternate raw powder for the cubic C-containing Ta compound as in Process (a).

Each of the classified raw powders and raw materials for the primary portion of the binder phase shown in Table 1 each having a mean particle diameter of 0.3 µm to 0.9 µm were pulverized and mixed in a ball mill as in Example A. The cBN powder was then added to the mixture such that the particulate cBN had a content of 40 to 80 vol% after sintering, and mixed in a ball mill. The resultant slurry was dried to yield raw powders for the sintered compacts. For preparation of Comparative sintered compact 12 (described later), a mixture of raw materials for the primary portion of the binder phase was pulverized without use of raw powder for the cubic C-containing Ta compound, and the mixture was further mixed with cBN. The resultant mixture was then dried to produce raw powder for the sintered compact.

Green compacts produced from raw powders for sintered compacts were calcined and then sintered under ultra-high pressure at high temperature as in Example sintered compacts 1 to 19. The cBN sintered compacts of comparative examples (hereinafter referred to as "Comparative sintered compacts") 1 to 12 were produced as shown in Table 5.

**[Table 1]**

| Type | | Composition (vol%) | | | |
|---|---|---|---|---|---|
| | | TiN | TiC | TiCN | TiAl₃ |
| Raw material for primary portion in binder phase | a | 75 | - | - | 25 |
| | b | - | 75 | - | 25 |
| | c | - | - | 75 | 25 |
| | d | - | - | 85 | 15 |

| | | | | | |
|---|---|---|---|---|---|
| A "-" indicates that the element was not contained. | | | | | |

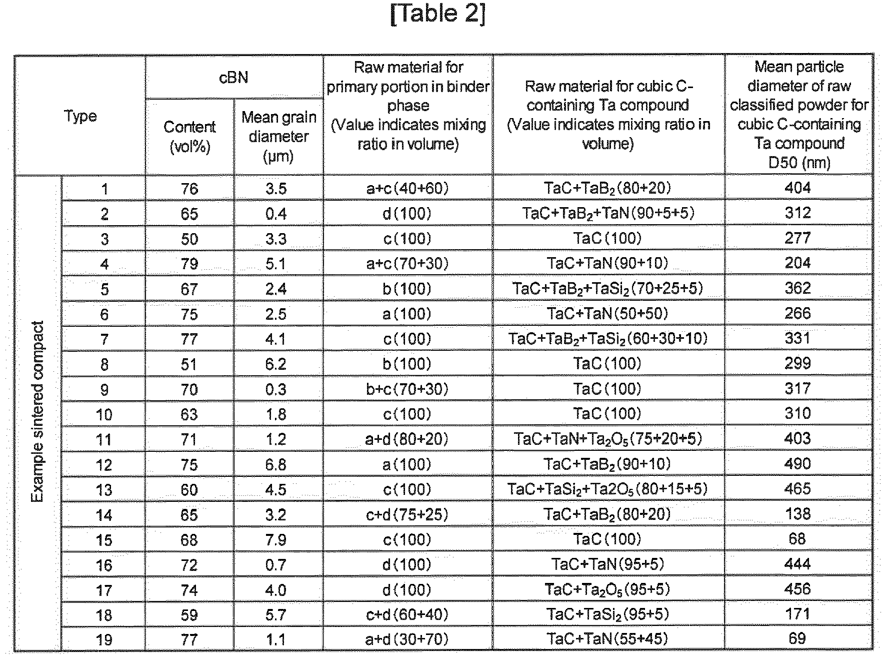

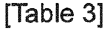

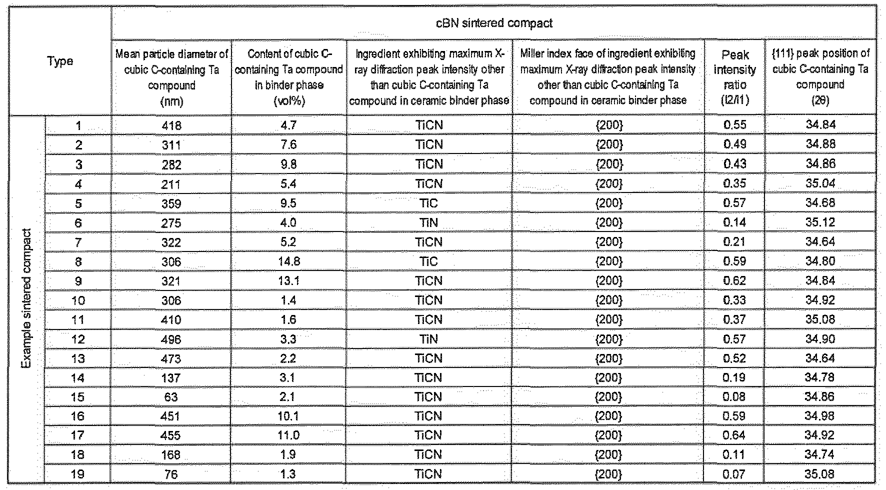

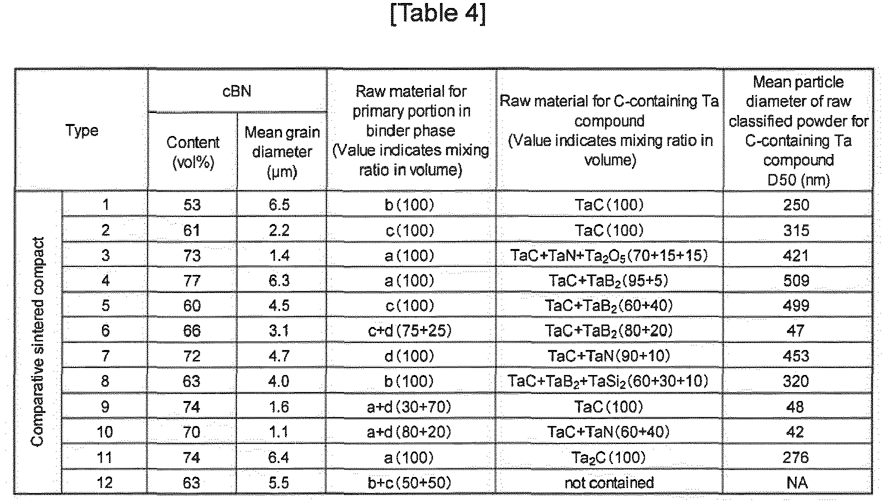

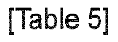

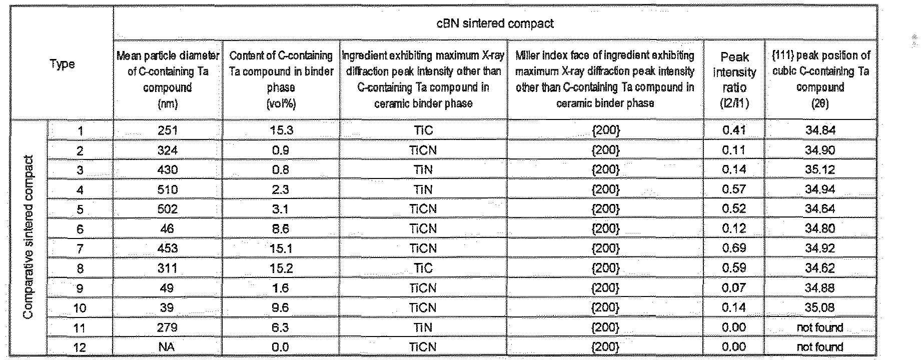

Example sintered compacts 1 to 19 and Comparative sintered compacts 1 to 12 produced as described above were each cut into predetermined dimensions with a wire electric discharge machine. Each piece of sintered compacts was then bonded into a brazed portion (i.e., a corner) of an insert made of WC-based hard metal alloy (with a composition consisting of 5 mass% Co, 5 mass% TaC and WC as the balance) having an insert shape in accordance with ISO standard CNGA120408 with brazing material (Ag alloy having a composition consisting of 26 mass% Cu, 5 mass% Ti and Ag as the balance), polished and honed on the upper, lower and outer peripheral surfaces to prepare example cutting tools made of cBN-based ultra-high pressure sintered compacts (referred to as "Example tools") 1 to 19 and comparative example cutting tools made of cBN-based ultra-high pressure sintered compacts (referred to as "Comparative tools") 1 to 12.

Example tools 1 to 19 and Comparative tools 1 to 12 were subjected to an intermittent cutting process under the following cutting conditions, and the intermittent cutting cycles up to the termination of tool life were measured.

### <Cutting condition 1>

A dry cutting test was carried out for high hardness steel under the following conditions:
Work material: round bars made of carburized and hardened steel (JIS SCM415, hardness: HRC 58 to 62) having eight longitudinal grooves at equal intervals in a length direction,
Cutting rate: 200m/min,
Cutting depth: 0.1 mm, and
Feed: 0.1 mm/rev.

The tool life was defined as the intermittent cutting cycles when the cutting edge of each tool reaches chipping or fracture, or when the maximum wear loss on the flank portion of cutting edge reaches 150 µm. The cutting edge was observed every 500 cycles of intermittent cutting to detect the presence or absence of fracture or chipping at the cutting edge and measure the wear loss.

Table 6 shows the results of the cutting test described above.

**[Table 6]**

| Type | Tool life (intermittent cutting cycles) | Type | Tool life (intermittent cutting cycles) |
|---|---|---|---|
| Example tool 1 | Chipping (after 23,000 cycles) | Comparative tool 1 | Noticeable wear loss (after 8,500 cycles) |
| Example tool 2 | Chipping (after 23,500 cycles) | Comparative tool 2 | Chipping (after 9,500 cycles) |
| Example tool 3 | Chipping (after 22,000 cycles) | Comparative tool 3 | Fracture (after 6,500 cycles) |
| Example tool 4 | Chipping (after 19,500 cycles) | Comparative tool 4 | Noticeable wear loss (after 9,500 cycles) |
| Example tool 5 | Chipping (after 17,500 cycles) | Comparative tool 5 | Fracture (after 8,000 cycles) |
| Example tool 6 | Chipping (after 12,500 cycles) | Comparative tool 6 | Chipping (after 8,500 cycles) |
| Example tool 7 | Chipping (after 13,500 cycles) | Comparative tool 7 | Fracture (after 6,000 cycles) |
| Example tool 8 | Chipping (after 15,000 cycles) | Comparative tool 8 | Fracture (after 6,500 cycles) |
| Example tool 9 | Chipping (after 12,500 cycles) | Comparative tool 9 | Chipping (after 6,500 cycles) |
| Example tool 10 | Chipping (after 17,500 cycles) | Comparative tool 10 | Fracture (after 6,500 cycles) |
| Example tool 11 | Chipping (after 13,000 cycles) | Comparative tool 11 | Fracture (after 6,000 cycles) |
| Example tool 12 | Chipping (after 17,500 cycles) | Comparative tool 12 | Fracture (after 6,000 cycles) |
| Example tool 13 | Chipping (after 12,000 cycles) | | |
| Example tool 14 | Chipping (after 17,000 cycles) | | |
| Example tool 15 | Chipping (after 11,500 cycles) | | |
| Example tool 16 | Chipping (after 15,000 cycles) | | |
| Example tool 17 | Chipping (after 12,000 cycles) | | |
| Example tool 18 | Chipping (after 12,000 cycles) | | |
| Example tool 19 | Chipping (after 11,000 cycles) | | |

### <Example B>

cBN sintered compacts having a ceramic binder phase where part or all of the cubic C-containing Ta compound was replaced by the cubic C-containing Nb compound were produced in Example B.

Process (a): preparation of only crude TaC powder and crude NbC powder and Process (b): preparation of additional crude powder other than crude TaC and NbC were both used as in Example A to produce cBN sintered compacts of Example B.

### Preparation of raw powder by Process (a)

Example sintered compacts 20 and 28 (described later) were produced based on this process. Crude NbC powder having a mean particle diameter of 1.5 µm was pulverized in a ball mill as described above, and then subjected to centrifugal classification to yield raw powders having mean particle diameters (i.e., median diameters D50) shown in Table 7 for cubic C-containing Nb compounds (hereinafter, referred to as raw powders for (Ta,Nb)C).

### Preparation of raw powder by Process (b)

Example sintered compacts 21 to 27 and 29 to 37 (described later) were produced based on this process. In addition to TaC powder, TaN powder, TaB₂ powder, TaSi₂ powder and Ta₂O₅ powder used in Example A, NbC powder having a mean particle diameter of 1.5 µm, and NbN powder, NbB₂ powder, NbSi₂ powder, and Nb₂O₅ powder each having a mean particle diameter of 1.0 to 6.0 µm were prepared and then mixed in predetermined proportions shown in Table 7. Each mixture was pressed into a shape with 50 mm in diameter by 3.0 mm in thickness under a shaping pressure of 1 MPa, and heated at 1200°C in a vacuum atmosphere of 1 Pa or less. The heated mixtures were pulverized with attrition and compression, and sieved through a screen having a mesh size of 45 µm to prepare processed powders.

The processed powders were pulverized in a ball mill as described above, and then subjected to centrifugal classification to yield raw powders having mean particle diameters (i.e., median diameters D50) shown in Table 7 for (Ta,Nb)C.

A ball mill container lined with hard metal alloy was filled with the raw powders for (Ta,Nb)C yielded by the two different processes described above and the raw materials for the primary portion of the binder phase having a mean particle diameter of 0.3 µm to 0.9 µm shown in Table 1, balls made of hard metal alloy and acetone, and was covered with a lid, and the powder mixture was pulverized and mixed in a ball mill. The cBN powder was then added to the mixture such that particulate cBN had a content of 40 to 80 vol% after sintering, and further mixed in a ball mill. The resultant slurry was dried to produce raw powders for the sintered compacts.

The resultant raw powders for sintered compacts were press-shaped under a pressure of 1 MPa to prepare green compacts with 50 mm in diameter by 1.5 mm in thickness. These green compacts were calcined at 900°C under a vacuum atmosphere of 1 Pa or less, and then sintered at 1400°C under a pressure of 5.5 GPa to produce cBN sintered compacts 20 to 37 of Examples (referred to as "Example sintered compacts 20 to 37") shown in Table 8.

It is noted that the main purpose of calcination applied to the green compacts is for removing the solvent contained during wet mixing.

The XRD pattern of Example sintered compact 20 is shown in FIG. 4. FIG. 4 illustrates the X-ray diffraction peak assigned to the {111} plane in the cubic C-containing Nb compound and the X-ray diffraction peak assigned to the {200} plane in TiC, which is defined as the maximum X-ray diffraction peak among the ingredients constituting the ceramic binder phase excluding the cubic C-containing Nb compound.

Comparative sintered compacts including (Ta,Nb)C having varieties of mean particle diameters, contents in the ceramic binder phase, diffraction peak positions of the {111} plane, and diffraction peak intensity ratios were produced as follows.

Crude NbC powder having a mean particle diameter of 1.5 µm based on Process (a) was processed similar to Example B to produce raw powders for (Ta,Nb)C in Comparative sintered compacts 21, 22 and 25 (described later). TaC powder having a mean particle diameter of 1.5 µm, NbC powder having a mean particle diameter of 1.5 µm, and TaN powder, TaB₂ powder, NbN powder, NbB₂ powder, NbSi₂ powder and Nb₂O₅ powder each having a mean particle diameter of 0.5 to 6.0 µm based on Process (b) were mixed in predetermined ratios shown in Table 9 and processed similar to Example B to produce raw powders for (Ta,Nb)C in Comparative sintered compacts 20, 23, 24 and 26 to 29 (described later). The mean particle diameters (i.e., median diameters D50) of these raw powders were as shown in Table 9.

Each of the classified raw powders and raw materials for the primary portion of the binder phase each having a mean particle diameter of 0.3 µm to 0.9 µm shown in Table 1, were pulverized and mixed in a ball mill as in Example B. The cBN powder was then added to the mixture such that the particulate cBN had a content of 40 to 80 vol% after sintering, and mixed in a ball mill. The resultant slurry was dried to yield raw powders for sintered compacts. For Comparative sintered compact 30, a mixture of raw materials for the primary portion of the binder phase was pulverized without use of raw powder for (Ta,Nb)C, and the mixture was further mixed with the addition of cBN. The resultant mixture was then dried to produce raw powder for the sintered compact.

Green compacts produced from raw powders for the sintered compacts were calcined and then sintered under ultra-high pressure at high temperature as in Example sintered compacts 20 to 37. The cBN sintered compacts of comparative examples (hereinafter referred to as "Comparative sintered compacts") 20 to 30 (13 to 19 are missing numbers) were produced as shown in Table 10.

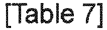

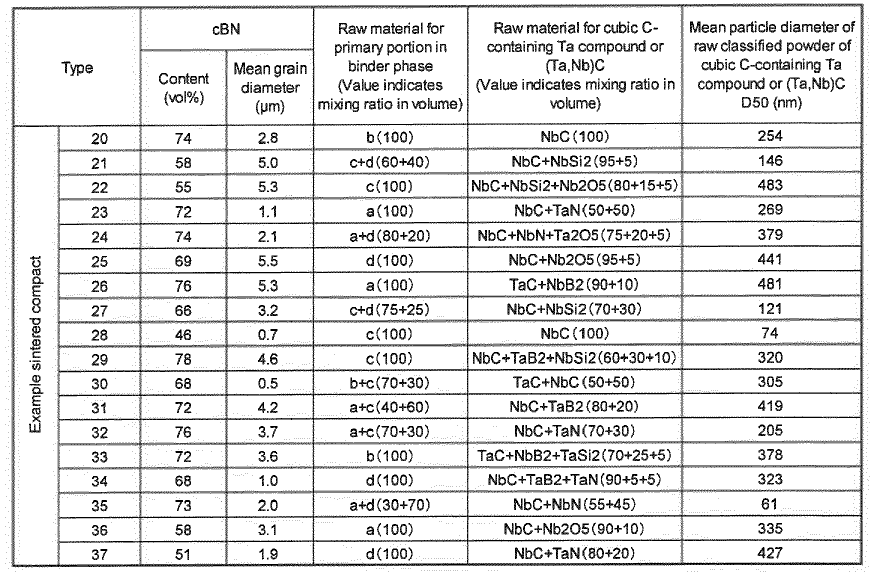

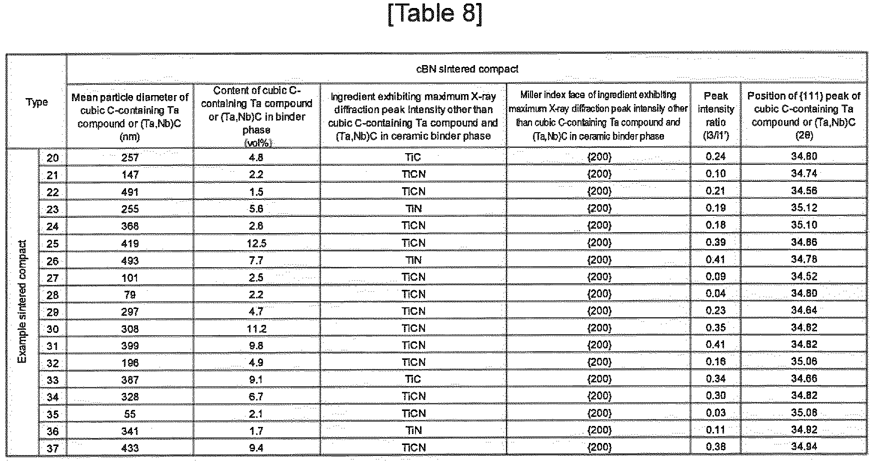

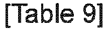

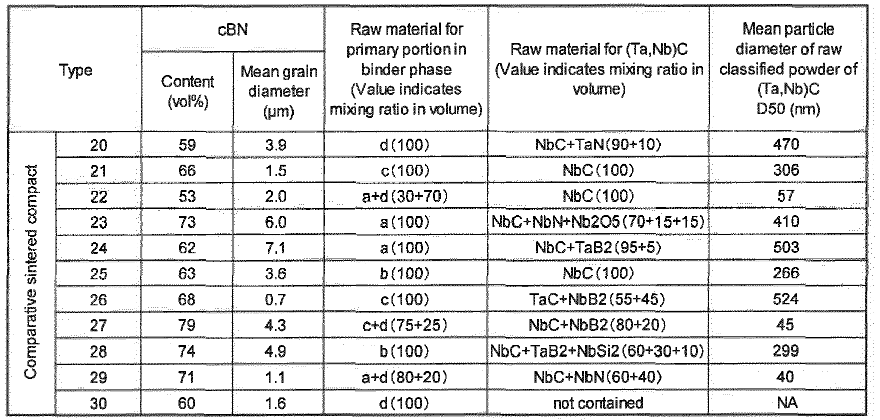

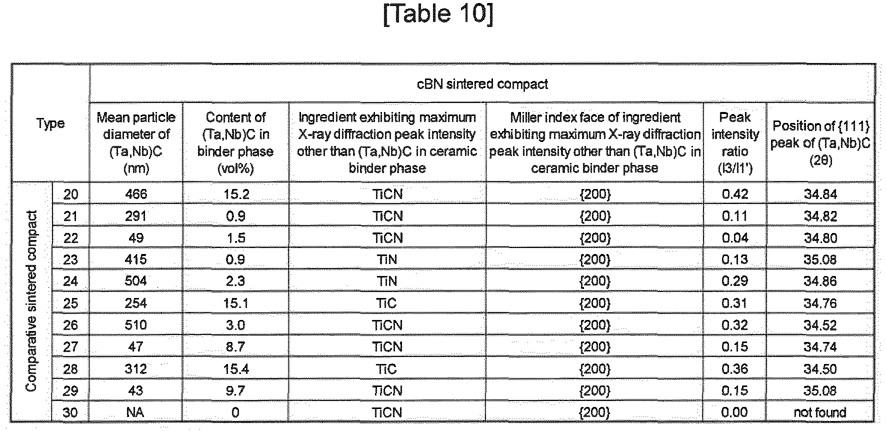

Example sintered compacts 20 to 37 and Comparative sintered compacts 20 to 30 prepared as described above were processed as in Example A to produce Example tools 20 to 37 and Comparative tools 20 to 30.

A cutting process was subsequently carried out with the following cutting conditions using Example tools 20 to 37 and Comparative tools 20 to 30, and the intermittent cutting cycles up to the termination of tool life was determined.

### <Cutting conditions 2>

A dry cutting test was carried out for high hardness steel with the following conditions:
Work material: round bars made of carburized and hardened steel (JIS SCM415, hardness: HRC 58 to 62) having eight longitudinal grooves at equal intervals in a length direction,
Cutting rate: 180m/min,
Cutting depth: 0.1 mm, and
Feed: 0.15 mm/rev.

The tool life was defined as the intermittent cutting cycles until the cutting edge of each tool reaches chipping or fracture, or the maximum wear loss on the flank portion of cutting edge reaches 150 µm. The cutting edge was observed every 500 cycles of intermittent cutting to detect the presence or absence of fracture or chipping at the cutting edge and measure the wear loss.

Table 11 shows the results of the cutting test described above.

**[Table 11]**

| Type | Tool life (intermittent cutting cycles) | Type | Tool life (intermittent cutting cycles) |
|---|---|---|---|
| Example tool 20 | Chipping (after 25,000 cycles) | Comparative tool 20 | Noticeable wear loss (after 6,000 cycles) |
| Example tool 21 | Chipping (after 18,000 cycles) | Comparative tool 21 | Chipping (after 9,000 cycles) |
| Example tool 22 | Chipping (after 17,000 cycles) | Comparative tool 22 | Fracture (after 6,000 cycles) |
| Example tool 23 | Chipping (after 15,000 cycles) | Comparative tool 23 | Fracture (after 7,000 cycles) |
| Example tool 24 | Chipping (after 15,000 cycles) | Comparative tool 24 | Noticeable wear loss (after 9,000 cycles) |
| Example tool 25 | Chipping (after 19,000 cycles) | Comparative tool 25 | Chipping (after 9,000 cycles) |
| Example tool 26 | Chipping (alter 13,500 cycles) | Comparative tool 26 | Noticeable wear loss (after 7,000 cycles) |
| Example tool 27 | Chipping (after 13,500 cycles) | Comparative tool 27 | Chipping (after 9,500 cycles) |
| Example tool 28 | Chipping (after 13,000 cycles) | Comparative tool 28 | Fracture (after 8,000 cycles) |
| Example tool 29 | Chipping (after 21,000 cycles) | Comparative tool 29 | Fracture (after 8,000 cycles) |
| Example tool 30 | Chipping (after 19,000 cycles) | Comparative tool 30 | Chipping (after 7,000 cycles) |
| Example tool 31 | Chipping (after 15,000 cycles) | | |
| Example tool 32 | Chipping (after 17,000 cycles) | | |
| Example tool 33 | Chipping (after 24,000 cycles) | | |
| Example tool 34 | Chipping (after 24,000 cycles) | | |
| Example tool 35 | Chipping (after 12,000 cycles) | | |
| Example tool 36 | Chipping (after 18,500 cycles) | | |
| Example tool 37 | Chipping (after 20,000 cycles) | | |

The results shown in Tables 6 and 11 indicate that all Example tools have no decrease in wear resistance, and cause no sudden fracture of the cutting edge or no early chipping as compared with the Comparative tools, resulting in an extended tool life, and superior fracture resistance and chipping resistance even in the intermittent cutting process of hardened steel.

The disclosed embodiments described above are merely illustrative in all respects and are nonrestrictive. The scope of the present invention is indicated by the scope of claims rather than the embodiments, and is intended to include meanings equivalent to the scope of claims and all modifications within the scope.

### Reference Numerals

- 1:: cBN
- 2:: Cubic C-containing Ta compound
- 3:: Cubic C-containing Nb compound
- 4:: Cubic C-containing (Ta,Nb) complex compound

## Claims

1. A cBN sintered compact comprising a cubic boron nitride and a ceramic binder phase, wherein a cubic C-containing Ta compound in an amount of 1.0 to 15.0 vol% is dispersed in the ceramic binder phase and has a mean particle diameter of 50 to 500 nm.

2. The cBN sintered compact according to claim 1, having a Bragg angle (2θ) of 34.66° to 35.06°, where the Bragg angle indicates the X-ray diffraction peak position assigned to the {111} plane in the cubic C-containing Ta compound.

3. The cBN sintered compact according to claim 1 or 2, having a ratio (I2/I1) of 0.10 to 0.60 of a second peak intensity (I2) to a first peak intensity (I1), where the first peak intensity (I1) indicates the maximum X-ray diffraction peak intensity among the ingredients constituting the ceramic binder phase excluding the cubic C-containing Ta compound, and the second peak intensity (I2) indicates the X-ray diffraction peak intensity assigned to the {111} plane in the cubic C-containing Ta compound.

4. The cBN sintered compact according to claim 1, comprising a cubic compound composed of a cubic C-containing Nb compound by which the entire cubic C-containing Ta compound is replaced.

5. The cBN sintered compact according to claim 1, comprising a cubic compound composed of a cubic C-containing Nb compound by which part of the cubic C-containing Ta compound is replaced.

6. The cBN sintered compact according to claim 4 or 5, having a Bragg angle (2θ) of 34.53° to 35.06°, where the Bragg angle indicates the X-ray diffraction peak position assigned to the {111} plane in the cubic compound.

7. The cBN sintered compact according to any of claims 4 to 6, having a ratio (I3/I1') of 0.05 to 0.40 of a third peak intensity (I3) to a first peak intensity (I1'), where the first peak intensity (I1') indicates the maximum X-ray diffraction peak intensity among the ingredients constituting the ceramic binder phase excluding the cubic compound, and the third peak intensity (I3) indicates the X-ray diffraction peak intensity assigned to the {111} plane in the cubic compound d.

8. A cutting tool containing the cBN sintered compact according to any of claims 1 to 7 as a tool substrate.
